# EUROPEAN PATENT SPECIFICATION

(11) **EP 4 208 332 B1**
(45) Date of publication and mention of the grant of the patent: **17.07.2024**
(21) Application number: 21773054.8
(22) Date of filing: 02.09.2021
(51) Int. Cl.: B29D 30/00, B29D 30/48, B29D 30/26

(54) **DEVICE FOR CENTERING A SEMIFINISHED TIRE PRODUCT, CENTERING SYSTEM COMPRISING SUCH CENTERING DEVICES, CENTERING TABLE COMPRISING SUCH A CENTERING SYSTEM, AND METHOD FOR MANUFACTURING SUCH A SEMIFINISHED TIRE PRODUCT**
ZENTRIERVORRICHTUNG FÜR EIN REIFENHALBZEUG, ZENTRIERSYSTEM MIT SOLCHEN ZENTRIERVORRICHTUNGEN, ZENTRIERTISCH UND VERFAHREN ZUR HERSTELLUNG EINES SOLCHEN REIFENHALBZEUGS
DISPOSITIF DE CENTRAGE D'UN PRODUIT PNEUMATIQUE SEMI-FINI, SYSTÈME DE CENTRAGE COMPRENANT DE TELS DISPOSITIFS DE CENTRAGE, TABLE DE CENTRAGE COMPRENANT UN TEL SYSTÈME DE CENTRAGE, ET PROCÉDÉ DE FABRICATION D'UN TEL PRODUIT PNEUMATIQUE SEMI-FINI

(30) Priority: 04.09.2020 FR 2009009
(43) Date of publication of application: 12.07.2023
(73) Proprietor: Continental Reifen Deutschland GmbH, 30175 Hannover (DE)
(72) Inventor: STAUDT, Serge, 30165 Hannover (DE); NEY, Michel, 30165 Hannover (DE); RANDAZZO, Angelo, 30165 Hannover (DE); JORDY, Nicolas, 30165 Hannover (DE); FRANCK, Claude, 30165 Hannover (DE)
(74) Representative: Continental Corporation
(86) International application number: PCT/EP2021/074305
(87) International publication number: WO 2022/049216

(56) References cited:
- EP-A1- 2 676 789
- JP-A- 2011 235 525
- US-A1- 2018 339 477

## Description

The invention relates to a centering device for centering a semifinished tire product and an interlayer of the semifinished tire product, to a centering system comprising a plurality of such centering devices, to a centering table comprising such a centering system, and to a method for centering such a semifinished tire product and such an interlayer of the semifinished tire product using such a centering table.

Such a semifinished tire product may be an unfinished product such as a tire apex. The apex of a tire corresponds in particular to the part of the tire that is situated above the bead for reinforcing the sidewall. The bead of a tire is the part of the tire that joins said tire to the rim in a sealed manner.

The interlayer of the semifinished tire product is formed by a ring that is separate from the semifinished tire product and allows the formation and transport of the semifinished tire product.

Although the invention is particularly applicable for the formation of a tire apex, it can be applied to other semifinished tire products to allow them to be centered on the machine.

The invention applies even more particularly to the formation of a domed semifinished product, such as a domed tire apex.

In the case of the formation of a domed tire apex, it is known to successively supply, onto a centering table of a station:
a first interlayer of a tire apex using a first transfer module,
a flat annular elastomer strip, intended to form the tire apex, using a second transfer module in order to be set down on the first interlayer,
then a second interlayer of the tire apex using the same first transfer module in order to be set down on the flat annular elastomer strip.

The first interlayer and the second interlayer have identical domed annular shapes in order to confer the domed shape on the flat annular elastomer strip.

While the second interlayer is being supplied onto the centering table, centering elements of this first transfer module ensure that the annular strip/interlayers stack is centered with respect to the centering table.

Then, once the centering of the stack has been completed, the first transfer module presses the second interlayer against the flat annular elastomer strip. The flat annular elastomer strip held between the first interlayer and the second interlayer then conforms to the domed shape of the interlayers in order to form a tire apex referred to as domed.

Once the domed apex has been formed, a second flat annular elastomer strip, intended to form a second tire apex, is supplied using the second transfer module in order to be set down on the second interlayer of the stack formed.

Then a third interlayer is supplied using the first transfer module in order to be set down on the second flat annular elastomer strip. The operation of centering and pressing is then repeated on the stack formed by the second flat annular elastomer strip and the second and third interlayers in order to form a second tire apex referred to as domed.

Thus, the domed tire apexes are formed successively by stacking until a predetermined batch has been achieved that can be discharged from the centering table.

To discharge this batch of domed tire apexes, the centering table is guided vertically by a vertical linear guide device between a high centering position for preparing the batch of domed tire apexes and a low position for discharging this batch onto a conveyor.

The production of domed tire apexes as described has a number of drawbacks.

First of all, the successive formation of domed tire apexes by accumulation on the centering table has a negative effect on the quality of the centering of the next domed tire apex to be formed. Specifically, since the main centering axis of the next tire apex to be produced is defined by the first transfer module via its centering elements, this main centering axis may be off-center with respect to the main centering axis of the domed tire apex initially formed on the centering table.

Next, the manufacture of domed tire apexes as described also has the drawback of a slow production rate requiring the presence of one operator per station dedicated to the monitoring and the discharging of the batch formed, representing a significant burden for the operator.

The storage of domed tire apexes at one and the same station is thus limited to the quantity of apexes that can be accumulated per batch, generally 10 domed tire apexes. It will be understood that a batch of 10 domed tire apexes comprises 10 apexes and 10 interlayers.

Furthermore, the successive accumulation of domed tire apexes has a negative effect on the quality of centering since it contributes, through its weight, to the inclination of the centering table with respect to the first transfer module.

Moreover, the repetition of the operation of pressing the interlayer at the top of this accumulation contributes to fatiguing of the mechanical elements of the vertical linear guide device of the centering table.

Prior art relating to a bead core-apex subassembly as it may be used as a pre-assembled component in the manufacturing of a pneumatic tire can be found in EP 2676789 A1. More particularly, EP 2676789 A1 relates to an apparatus for manufacturing an annular bead core-apex subassembly and a method of manufacturing an annular bead core-apex subassembly. Further prior art is disclosed in US 2018/339477 A1 and JP 2011235525 A.

The objective of the invention is to remedy at least one of the abovementioned drawbacks by proposing a centering device, a centering system, a centering table, and a centering method that make it possible to improve the centering of a semifinished tire product and an interlayer of the semifinished product.

To this end, according to a first aspect, the subject of the invention is a centering device for centering a semifinished tire product and an interlayer of the semifinished tire product on a centering system, the centering device comprising:
a support intended to be secured to the centering system,
a first centering element that is fixed to the support in a rotatable manner and is configured to center the semifinished tire product,
a second centering element that is fixed to the first centering element in a rotatable manner and is configured to center the interlayer of the semifinished tire product.

The kinematic dependence of the first centering element and of the second centering element with respect to the support makes it advantageously possible for the centering device according to the invention to successively effect centering of the semifinished tire product and centering of the interlayer of the semifinished tire product with respect to the centering system, specifically by driving a single centering element in rotation. This ensures that the semifinished tire product and the interlayer of the semifinished tire product are jointly centered with respect to a main centering axis of the centering system. Such centering allows the formation of a semifinished product, such as a domed tire apex of homogeneous section.

According to one embodiment of the invention, the first centering element is fixed to the support so as to be rotatable about a first axis of rotation, and the second centering element is fixed to the first centering element so as to be rotatable about a second axis of rotation, the first axis of rotation and the second axis of rotation being offset with respect to one another.

The first axis of rotation and the second axis of rotation that are offset with respect to one another allow the formation of a lever arm for the actuation of the first centering element and the second centering element with respect to one another.

Advantageously, the first centering element and the second centering element are rigid and parallel to one another.

According to another embodiment of the invention, the second centering element comprises an attachment element that is fixed to the second centering element along a third axis of rotation and is configured to be attached to an actuating arm of the centering system, and the third axis of rotation is offset with respect to the first axis of rotation and to the second axis of rotation.

The attachment element allows the control by the actuating arm of the second centering element to which it is connected and the control of the first centering element kinematically connected to the second centering element.

The third axis of rotation, which is offset with respect to the first axis of rotation and the second axis of rotation, allows the formation of a lever arm for the actuation of the second centering element without the first centering element being blocked.

According to another embodiment of the invention, the second centering element comprises a stop engaged in a recess in the first centering element, and a compression element fixed to the stop extends along the recess of the first centering element.

The stop and the compression element have the effect of facilitating the driving in rotation of the first centering element when the second centering element is driven in rotation. Moreover, the compression element makes it possible to return the first centering element when the second centering element is brought back into its rest position corresponding to the rest position of the centering system.

According to an embodiment variant of the preceding embodiment, the second centering element comprises the engaged stop, known as the first stop, and a second stop engaged in a recessed angular portion of the first centering element.

The second stop and the angular portion make it possible to constrain the angular movement of the second centering element to a predetermined travel proportional to the travel of the first centering element.

According to one feature of the preceding embodiment variant, the first centering element comprises a travel adjuster for adjusting the travel of the second stop of the second centering element along the angular portion of the first centering element.

Such an adjuster allows precise adjustment of the travel of said second stop and therefore of the second centering element.

According to another embodiment of the invention, the support comprises a base intended to be secured to the centering system and a support element on which the first centering element and the second centering element bear.

According to an embodiment variant of the preceding embodiment, the first centering element comprises a stop engaged in a recessed angular portion of the support element.

The stop of the first centering element and the angular portion of the support element make it possible to constrain the angular movement of the first centering element to a predetermined travel limited by the support element.

According to one feature of the preceding embodiment variant, the support element comprises a travel adjuster for adjusting the travel of the stop of the first centering element along the angular portion of the support element.

Such an adjuster allows precise adjustment of the travel of the stop of the first centering element and therefore of the first centering element.

Advantageously, the first centering element is held between the support element and the second centering element.

According to another embodiment of the invention, the first centering element and the second centering element each comprise a face intended to engage respectively with the semifinished tire product and the interlayer of the semifinished tire product, and each face bears a centering adjuster.

It will be understood that the travel and/or centering adjusters make it possible to calibrate the centering system depending on the dimensions of the semifinished product to be produced.

Thus, one and the same centering device can be adapted to the production of several ranges of semifinished products.

According to a second aspect, the invention relates to a system for centering a semifinished tire product and an interlayer of the semifinished tire product.

The centering system may comprise a support plate.

The centering system may comprise a plurality of centering devices as defined above, wherein each centering device is fixed by its support to the support plate such that the plurality of centering devices are regularly distributed angularly about a main centering axis of the centering system.

Advantageously, the centering system comprises five centering devices.

According to one embodiment of the centering system, it comprises a device for actuating the centering devices, the actuating device being movable in translation with respect to the support plate along said main centering axis, and each centering device is connected to the actuating device by way of an actuating arm.

According to one embodiment variant of the preceding embodiment, each actuating arm is secured to the actuating device by a fixed connection and secured to its associated centering device by a slideway connection by way of an attachment element.

According to one embodiment of the centering system, it comprises a domed molding die fixed to the support plate, the domed molding die being intended to shape the semifinished tire product.

The molding die is made of metal material, and preferably the metal material comprises an amorphous carbon coating, of the sucaslide type.

Advantageously, the molding die and the interlayer of the semifinished tire product have corresponding shapes.

According to one embodiment variant of the preceding embodiment, the domed molding die is formed by the assembly of at least two assemblies.

According to one embodiment, the centering system comprises a lifting arm intended to separate the semifinished tire product from a semifinished product mold, the lifting arm being rotatable with respect to the support plate.

According to one alternative, the lifting arm comprises at least one lifting branch, a free portion of which is intended to be received in a notch formed in the dome of a semifinished product mold.

According to one alternative, the at least one lifting branch comprises a curved portion and a flat portion one after the other, the flat portion forming said free portion.

Advantageously, the lifting arm comprises two lifting branches, each of which comprises a free portion intended to be received in a notch in the dome of a semifinished product mold.

According to one alternative, the lifting arm is movable between an angular rest position in which the free portion of the lifting arm is received in the notch of the semifinished product mold and an angular lifting position in which the free portion of the lifting branch is disengaged from the notch.

According to a third aspect, the invention relates to a table for centering a semifinished tire product and an interlayer of the semifinished tire product, the centering table comprising a frame to which a centering system as claimed in any one of the preceding claims is fixed.

According to one embodiment of the centering table, it comprises a vertical linear guide device that is fixed to a first side of the frame and is configured to vertically guide the centering table along a vertical axis with respect to the ground, wherein the centering table also comprises a belt-pulley system, the belt of which has a first end attached to a fixed point with respect to the ground and a second end attached to a second side of the frame that is not fixed to the vertical linear guide device and is on the opposite side from the first side.

According to one embodiment of the centering table, at least one part of the belt having the second end is tensioned vertically with respect to the vertical axis with the aid of a pulley of the belt-pulley system.

According to one embodiment of the centering table, the vertical axis for guiding the centering table and the main centering axis of the centering system are parallel and offset with respect to one another.

According to one embodiment of the centering table, it comprises a horizontal linear guide device that is mounted on the frame and is configured to horizontally guide the centering system along a horizontal axis with respect to the ground.

According to a fourth aspect, the invention relates to a method for manufacturing a semifinished tire product using a centering system as defined above, mounted on a centering table.

The manufacturing method may comprise the following steps:
an initial step of positioning the centering system in which a mold of the semifinished product is mounted in advance on the centering system,
a first supply step, using a first gripping system, in which a semifinished tire product, in the form of a flat annular elastomer strip, is supplied to the mold,
a second supply step, using a second gripping system, in which an interlayer of the semifinished tire product, with a shape corresponding to the mold and having an inside diameter greater than the inside diameter of the flat annular elastomer strip, is supplied to the semifinished tire product,
a first centering step in which a first angular movement of the second centering elements of the centering devices brings the first centering elements of the centering devices into a first position centering said semifinished product with respect to the main centering axis of the centering system,
a second centering step, consecutive to the first centering step, in which a second angular movement of the second centering elements of the centering devices brings the second centering elements into a second angular position centering the interlayer of said semifinished product with respect to said main centering axis.

According to one embodiment of the manufacturing method, it comprises a pressing step in which the interlayer is pressed by the second gripping system against the mold by way of the flat annular elastomer strip in order to give the flat annular elastomer strip the domed shape of the mold and of the interlayer.

According to one embodiment of the manufacturing method, in a step of separating said semifinished product and its interlayer with respect to the mold, a lifting arm of the centering system separates said semifinished product and its interlayer from the mold.

The separating step is advantageously carried out after the pressing step.

According to one embodiment of the manufacturing method, in which the centering system is mounted on a centering table, the manufacturing method comprises a step of discharging said semifinished product and its interlayer, the centering system is guided vertically in translation with the aid of a vertical linear guide device and guided horizontally in translation with the aid of a horizontal linear guide device in order to discharge the semifinished product and its interlayer on an arm of a discharging carousel.

The discharging step is advantageously carried out after the separating step.

Further features and advantages of the invention will become apparent from reading the following nonlimiting description and studying the appended figures, which schematically illustrate a number of embodiments of the invention.
[Fig. 1A] shows a perspective view of a system for centering a semifinished tire product and an interlayer associated with the semifinished tire product, in a rest position.
[Fig. 1B] shows a perspective view of the centering system from figure 1 in a position centering the semifinished tire product and its interlayer.
[Fig. 2] shows a perspective front view of a centering device with which the centering system is equipped.
[Fig. 3] shows a perspective rear view of the centering device from figure 2.
[Fig. 4] shows a perspective bottom view of the centering device from figure 2.
[Fig. 5] shows a side view of the centering device from figure 2.
[Fig. 6] shows a face-on view of the centering device from figure 2.
[Fig. 7] shows a side view of a support plate of a support for the centering device.
[Fig. 8] shows an exploded perspective view of a first centering element and of a second centering element of the centering device.
[Fig. 9] shows a view in cross section A-A of the centering device from figure 5.
[Fig. 10] shows a view in cross section B-B of the centering device from figure 5.
[Fig. 11] shows a view in cross section D-D of the centering device from figure 5.
[Fig. 12] shows a perspective view of a stop (a) intended to equip the first centering element and the second centering element and a stop (b) intended to equip the second centering element.
[Fig. 13] shows a perspective view of a support plate of the centering system equipped with a molding die and in which an enlargement A of this view is shown.
[Fig. 14] shows a perspective view of the support plate illustrated in figure 13.
[Fig. 15] shows a perspective view of a first assembly forming the molding die.
[Fig. 16] shows a perspective view of a second assembly forming the molding die.
[Fig. 17] shows a perspective view of a lever arm with which the centering system is equipped.
[Fig. 18] shows a perspective view of an actuating device for the centering devices.
[Fig. 19A] shows a perspective side view of a centering device at rest, on which a first reference interlayer, a flat annular elastomer strip intended to form the semifinished tire product, and a second interlayer are mounted one after another.
[Fig. 19B] shows the centering device from figure 19A in a first centering position.
[Fig. 19C] shows the centering device from figure 19A in a second centering position.
[Fig. 20A] shows a perspective view of a centering table equipped with the centering system, and in which the centering table brings the centering system into an initial position for manufacturing a semifinished tire product.
[Fig. 20B] shows the centering table from figure 20A in a rest position of the semifinished tire product.
[Fig. 21] shows a flowchart of a method according to the invention.

The term "semifinished product" means a semifinished tire product.

The term "interlayer" means an interlayer of the semifinished tire product.

Without this limiting the invention, the semifinished tire product described below is a domed tire apex, referred to as domed apex.

It will be recalled that an apex of a tire corresponds in particular to the part of the tire that is situated above the bead for reinforcing the sidewall. The bead of a tire is the part of the tire that joins said tire to the rim in a sealed manner.

Furthermore, it will be recalled that an interlayer of the semifinished tire product is formed by a ring that is separate from the semifinished tire product and allows the formation and transport of the semifinished tire product.

A distinction will be drawn between a domed tire apex and a flat tire apex.

A tire apex is said to be domed on account of its curved section, in contrast to a flat apex, in which the section is flat.

The semifinished product, namely the domed apex, is in the initial form of a flat annular elastomer strip before it is shaped by pressing. The pressed semifinished product then takes on a domed shape.

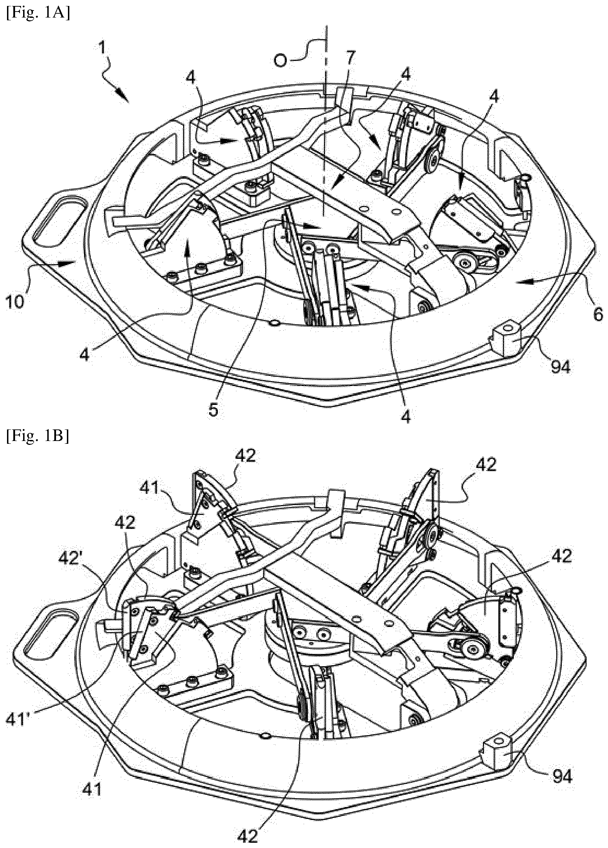

Figures 1A and 1B show a centering system 1 intended to center a semifinished product 2 and an interlayer 3 of the semifinished product 2, specifically before a pressing operation consisting in pressing the interlayer 3 of the semifinished product 2 against the semifinished product 2 itself, as will be described below.

The centering system 1 comprises a support plate 10, a plurality of centering devices 4 (in this case five centering devices), a device 5 for actuating the centering devices 4, a molding die 6 of domed shape, and a lifting arm 7.

Each centering device 4 comprises a support 40 mounted fixedly on the support plate 10. The plurality of centering devices 4 are regularly distributed angularly about a main centering axis O of the centering system 1, the molding die 6 surrounding the plurality of centering devices 4.

The actuating device 5 is mounted so as to be movable in translation with respect to the support plate 10 in the direction of the main centering axis O.

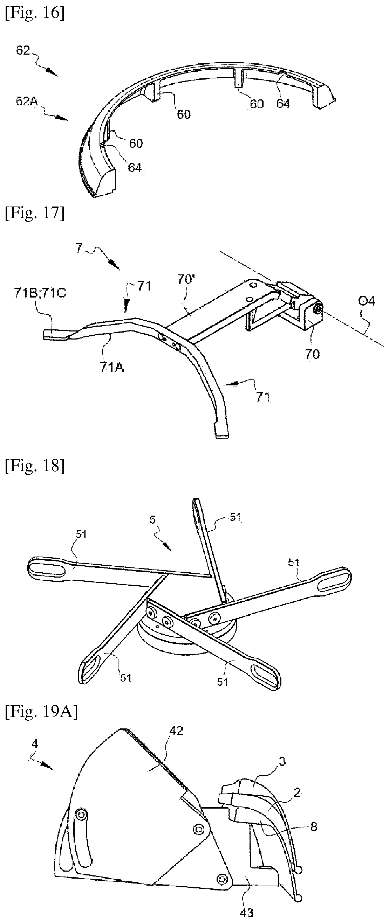

Each centering device 4 is connected to the actuating device 5 by way of an actuating arm 51 in order for the centering devices 4 to be controlled by the actuating device 5 (cf. figure 18) .

Figure 1A shows the centering system 1 in which the actuating device 5 is in a low position corresponding to a rest position of the centering system 1 in which the centering devices 4 are disengaged from the semifinished product 2 and from the associated interlayer 3.

Figure 1B shows the centering system 1 in which the actuating device 5 is in a high position corresponding to a centering position of the centering system 1 in which the centering devices 4 are engaged with the semifinished product 2 and the associated interlayer 3.

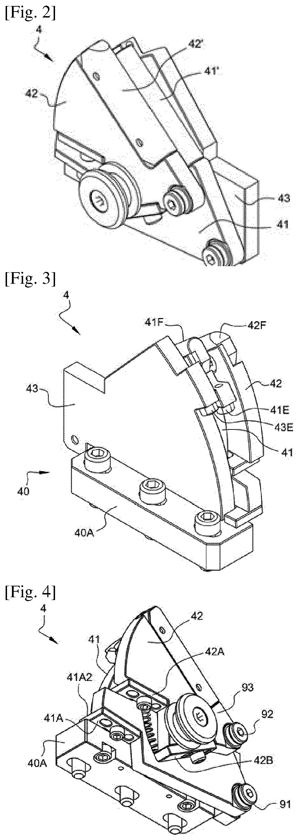

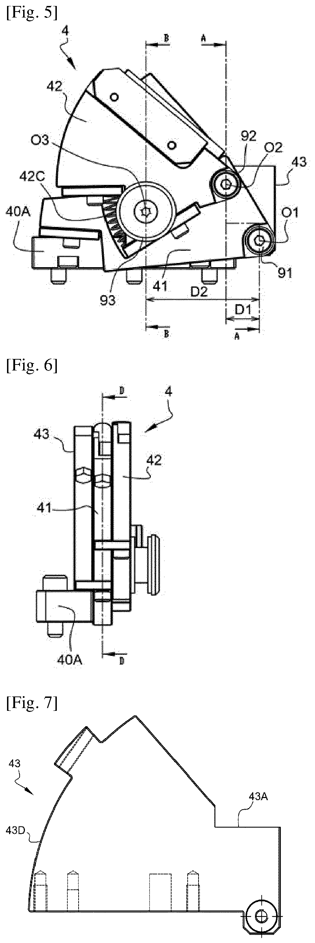

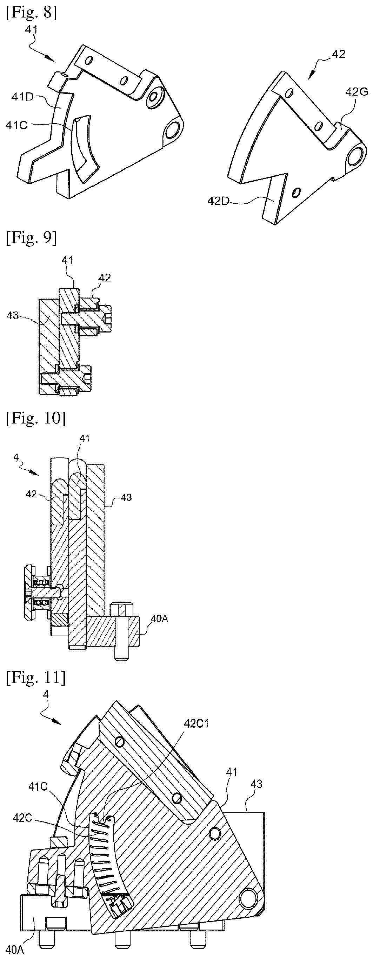

With reference to figures 2 to 11, different views of a centering device 4 with which the centering system 1 is equipped are shown.

The centering device 4 allows the centering of the semifinished product 2 and of its associated interlayer 3 on the centering system 1 about the main centering axis O.

The centering device 4 comprises a support 40, a first centering element 41 and a second centering element 42.

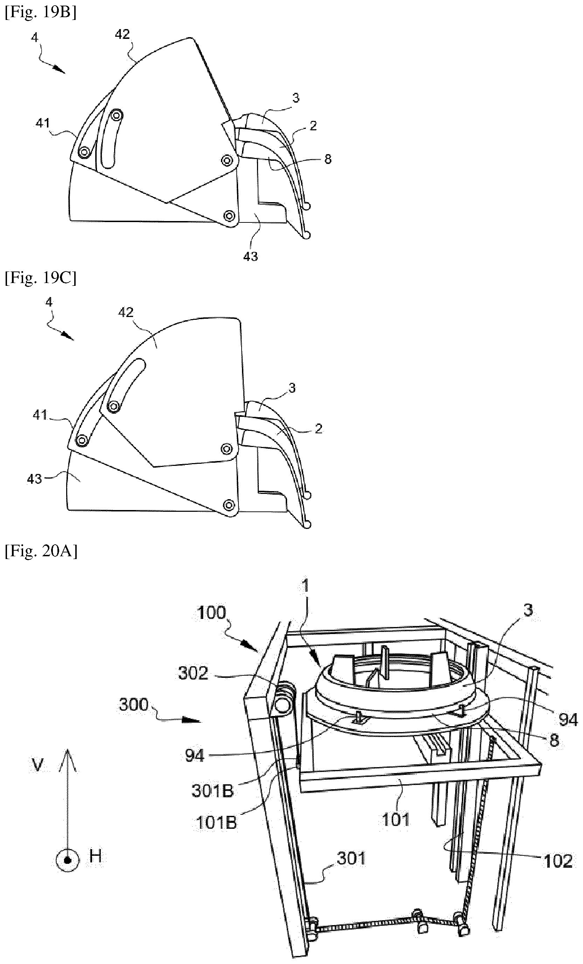

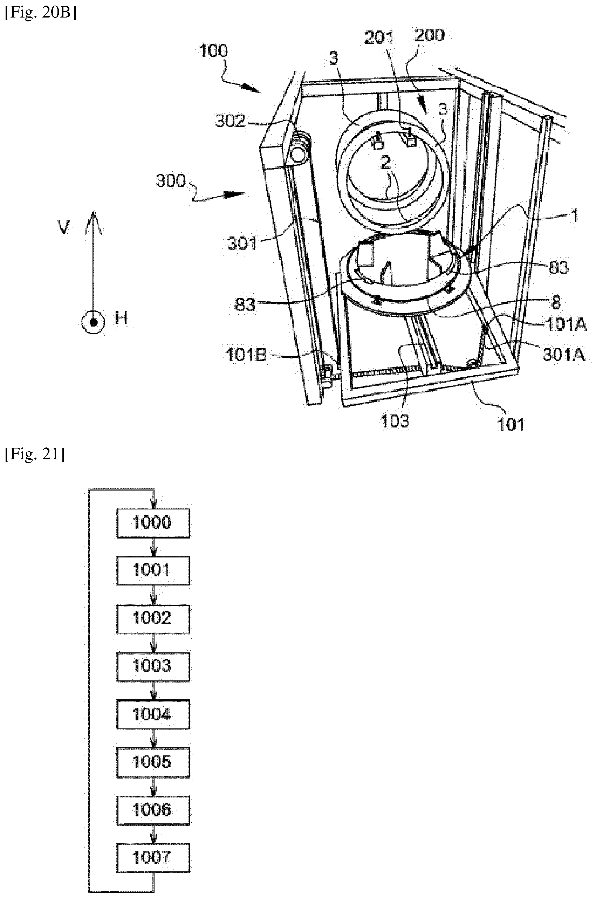

The support 40 comprises a base 40A intended to be fixed to the support plate 10 of the centering system 1 and a support element 43 fixed to the base 40A. The support element 43 allows the first centering element 41 and the second centering element 42 to bear against it. The support element 43 comprises a recess 43A intended to receive a mold 8 (illustrated in figures 19 and 20) for the semifinished product 2. Such a mold 8 for the semifinished product 2 allows the semifinished product 2 to be supported during the pressing of the interlayer 3.

The support element 43, the first centering element 41 and the second centering element 42 are rigid and parallel to one another.

Advantageously, the support element 43, the first centering element 41 and the second centering element 42 are alongside one another to facilitate their kinematic dependence.

The first centering element 41 is shown held between the support element 43 and the second centering element 42.

The first centering element 41 is fixed to the support element 43 so as to be rotatable about a first axis of rotation O1, the fixing being realized by a first flanged bearing 91.

The first centering element 41 is intended to ensure the centering of the semifinished product 2, while the second centering element 42 is intended to ensure the centering of the interlayer 3 separately from the first centering element 41.

Furthermore, the second centering element 42 is fixed to the first centering element 41 so as to be rotatable about a second axis of rotation O2, the fixing being realized by a second flanged bearing 92.

The first axis of rotation O1 and the second axis of rotation O2 are intended to be orthogonal to the main centering axis O of the centering system 1 when the centering device 4 is mounted thereon.

The first axis of rotation O1 and the second axis of rotation O2 are offset with respect to one another such that the first axis of rotation O1 is at a first predetermined distance D1 from the second axis of rotation O2, thus forming a first lever arm of the second centering element 42.

An attachment element 93 formed by a bearing roller is fixed to the second centering element 42 so as to be rotatable about a third axis of rotation O3, the third axis of rotation O3 being offset with respect to the first axis of rotation O1 and to the second axis of rotation O2.

The bearing roller is attached to an actuating arm 51 of the device 5 for actuating the centering system 1 by a slideway connection. Each actuating arm 51 is secured to the actuating device 5 by a fixed connection, as is shown in figure 18.

The third axis of rotation O3 is offset with respect to the first axis of rotation O1 and to the second axis of rotation O2 such that the third axis of rotation O3 is at a second predetermined distance D2, greater than the first predetermined distance D1, from the first axis of rotation O1, thus forming a second lever arm of the second centering element 42.

The second centering element 42 comprises a first attached stop 42A.

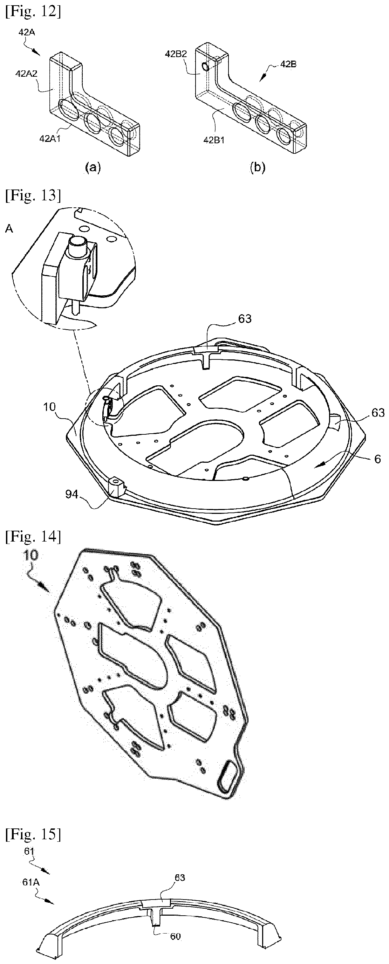

As shown in figure 12(a), the first stop 42A comprises a longitudinal portion 42A1 and a radial portion 42A2. The longitudinal portion 42A1 is intended to be fixed to the second centering element 42 such that the radial portion 42A2 of the first stop 42A engages in a recess 41C in the first centering element 41. The radial portion 42A2 is intended for the fixing of a compression element 42C, such as a compression spring, fixed to the radial portion 42A2. The compression element 42C is furthermore connected, at its opposite end 42C1, to the first centering element 41 in the recess 41C thereof.

The recess 41C takes the form of a circular portion in order to accompany the movement of the radial portion 42A2 of the first stop 42A during the rotational movement of the second centering element 42.

The second centering element 42 also comprises a second attached stop 42B.

As shown in figure 12(b), the second stop 42B comprises a longitudinal portion 42B1 and a radial portion 42B2. The longitudinal portion 42B1 is intended to be fixed to the second centering element 42 such that the radial portion 42B1 of the second stop 42B engages in a recessed angular portion 41D of the first centering element 41. The recessed angular portion 41D of the first centering element 41 delimits a first predetermined travel by which the second stop 42B can move.

The first stop 42A and the second stop 42B are advantageously offset angularly from one another to allow first of all easier driving of the first centering element 41 by way of said first stop 42A and then to determine the allowed travel of the second centering element 42 by way of said second stop 42B.

To adjust said first travel, the first centering element 41 may comprise a first travel adjuster 41E mounted on the first centering element 41 in order to modify the allowed length of travel of the second stop 42B of the second centering element 42 along the recessed angular portion 41D of the first centering element 41.

The first travel adjuster 41E in this case takes the form of a clamping screw fixed to the first centering element 41 such that its head extends into the recessed angular portion 41D of the first centering element 41. The tightening or untightening of the screw head thus makes it possible to limit or not to limit the travel of the second stop 42B.

In a manner similar to the second centering element 42, the first centering element 41 comprises a stop 41A, known as the third stop 41A, which is of identical shape to the above-described second stop 42B and the radial portion 41A2 of which is engaged in a recessed angular portion 43D of the support element 43. The recessed angular portion 43D of the support element 43 delimits a second predetermined travel by which the third stop 41A can move.

To adjust said second travel, the support element 43 may comprise a second travel adjuster 43E mounted on the support element 43 in order to modify the allowed length of travel of the stop 41A of the first centering element 41 along the recessed angular portion 43D of the support element 43.

The second travel adjuster 43E takes the form of a clamping screw fixed to the support element 43 such that its head extends into the recessed angular portion 43D of the support element 43. The tightening or untightening of the screw head thus makes it possible to limit or not to limit the travel of the stop 41A of the first centering element 41.

To adjust the centering, the first centering element 41 and the second centering element 42 may each comprise a centering adjuster 41F, 42F equipping a face 41', 42' intended to engage respectively with the semifinished tire product 2 and the interlayer 3 of the semifinished tire product 2.

The centering adjusters 41F, 42F take the form of centering blocks. It is thus possible to adjust the centering of the centering device 4 depending on the dimensions of the semifinished product 2 to be produced.

Referring now to figure 13, the domed molding die 6 fixed to the support plate 10 from figure 14 is shown. The molding die 6 has a domed shape in order to give the semifinished product 2, initially presented in the form of a flat annular elastomer strip, this same shape by way of the interlayer 3 of the semifinished product 2, which also has a domed shape. A demolding shoe 94 is provided to keep the mold 8 against the molding die 6 during demolding.

The domed shape of the die 6 corresponds to a concave surface of the molding die 6.

The molding die 6 furthermore has stiffening ribs 60 for its concave surface.

The domed molding die 6 is formed in a modular manner by the assembly of at least two assemblies, namely a first assembly 61 and a second assembly 62.

The first assembly 61 comprises two first portions 61A of identical shape, of which a first portion is shown in figure 15, which together form a half of the molding die 6.

The second assembly 62, shown in figure 16, comprises a second portion 62A forming the other half of the molding die 6.

The concave surface of the molding die 6 comprises two notches 63, one for each first portion 61A of the first assembly 61.

The notches 63 of the molding die 6 correspond to notches 83 of the mold 8 of the semifinished product 2.

The concave surface of the molding die 6 comprises two openings 64, each formed on the second portion 62A of the second assembly 62.

Referring now to figure 17, a lifting arm 7 intended to ensure the separation of the semifinished tire product 2 from the mold 8 of the semifinished product 2 is shown.

The lifting arm 7 comprises a part 70 for fixing to the support plate 10 and is hinged so as to rotate about an axis O4 perpendicular to the main centering axis O.

Furthermore, the lifting arm 7 comprises a main branch 70' and two lifting branches 71, of which, for each lifting branch 71, a free portion 71C is received in a notch 83 of the mold 8 of the semifinished product 2 as shown in figure 20A.

Each lifting branch 71 comprises a curved portion 71A and a flat portion 71B one after the other, of which the flat portion 71B forms said free portion 71C.

The centering of a semifinished product 2 and of its interlayer 3 by way of a centering device 4 controlled by the centering system 1 will now be described with reference to the above description and to figures 19A to 19C.

Figures 19A to 19C show only a centering device 4 in different steps of centering a semifinished product 2 and an interlayer 3.

Note in particular that a mold 8 of the semifinished product 2 taking the form of an interlayer 3 with a shape similar to the molding die 6 is shown. As will be described below, the mold 8 of the semifinished product 2 is intended to equip the molding die 6 of the centering system 1 and to allow the shaping of the semifinished product 2 during the pressing of its interlayer 3.

The mold 8 of the semifinished product 2 is engaged by way of its inside diameter in the recess 43A of the support element 43.

The semifinished product 2, in the form of a flat annular elastomer strip, has an inside diameter smaller than the inside diameter of the interlayer 3 disposed on the semifinished product 2.

In the rest position of the centering system 1 shown in figure 1A, the actuating device 5 is in a low vertical position in which the centering devices 4 are disengaged from the semifinished product 2 and from the associated interlayer 3.

The actuating device 5 may occupy two high positions, namely a first high position corresponding to the centering of the semifinished product 2 by the first centering element 41 and a second high position corresponding to the centering of the interlayer 3 by the second centering element 42.

The first high position and the second high position follow one another starting from the rest position.

The movement along the main centering axis O of the actuating device 5 from the rest position to the first position simultaneously drives the second centering elements 42 of the centering devices 4 in rotation about the second axis of rotation O2.

For each centering device 4, the driving of the second centering element 42 in rotation causes the first centering element 41 to be driven in rotation about the first axis of rotation O1.

The first stop 42A of the second centering element 42 then pushes the compression element 42C in order to facilitate the guiding in rotation of the first centering element 41 about the first axis of rotation O1.

Since the second axis of rotation O2 is offset with respect to the first axis of rotation O1, the first centering element 41 is thus the first element to be engaged for the centering of the semifinished product 2.

The end of travel of the first centering element 41 thus corresponds to the abutment of the stop 41A of the first centering element 41 against the support element 43 by way of the second travel adjuster 43E.

In the first high position of the actuating device 5, the first centering element 41 of each centering device 4 is engaged by its centering adjuster 41F against the semifinished product 2 for the centering thereof.

Then, the movement along the main centering axis O of the actuating device 5 from the first high position to the second high position simultaneously again drives the second centering elements 42 of the centering devices 4 in rotation about the second axis of rotation O2, while the first centering elements 41 remain fixed.

Each second centering element 42 comprises a recess 42G that allows the second centering element 42 to move beyond the semifinished product 2 during its travel.

The end of travel of the second centering element 42 thus corresponds to the abutment of the second stop 42B of the second centering element 42 against the first centering element 41 by way of the first travel adjuster 41E.

In the second high position of the actuating device 5, the second centering element 42 of each centering device 4 is engaged by its centering adjuster 42F against the interlayer 3 for the centering thereof.

Referring now to figures 20A and 20B, a table 100 for centering a semifinished product 2 and an interlayer 3 is shown, the centering table 100 comprising a frame 101 to which the support plate 10 of the centering system 1 described above is fixed.

The centering table 100 is equipped with a vertical linear guide device 102 formed by a vertical rail that is fixed to one side of the frame 101 and is configured to vertically guide the centering table 100 along a vertical axis V with respect to the ground. The vertical axis V for guiding the centering table 100 and the main centering axis O of the centering system 1 are thus parallel and offset with respect to one another.

Furthermore, the centering table comprises a horizontal linear guide device 103 formed by a horizontal rail that is mounted on the frame 101 and is configured to horizontally guide the centering system 1 along a horizontal axis H with respect to the ground.

The method for manufacturing a semifinished product 2 such as a domed apex will now be described.

The molding die 6 is equipped in advance with the mold 8 having a domed shape corresponding to the molding die 6. The mold 8 is positioned on the molding die 6 such that its notches 83 engage with the notches 63 in the molding die 6. Demolding shoes 94 then keep the mold 8 against the demolding die.

Next, the centering table 100 is brought into an initial manufacturing position in which the centering system 1 can receive the semifinished product 2 and its associated interlayer 3, as is shown in figure 20A.

The vertical linear guide device 102 and the horizontal linear guide device 103 are configured to guide the centering system 1 horizontally and vertically into its initial position from a rest position.

Once the centering table 100 is in its initial position, a first supply step 1000 is carried out using a first gripping system (not shown), in which a semifinished product 2, in the form of a flat annular elastomer strip, is supplied to the mold 8 of the semifinished product 2.

Next, a second supply step 1002 is carried out using a second gripping system (not shown), in which an interlayer 3 of the semifinished product 2, with a shape corresponding to the mold 8 of the semifinished product 2 and having an inside diameter greater than the inside diameter of the flat annular elastomer strip, is supplied to the semifinished product 2.

Unlike the mold 8, the interlayer 3 does not have notches on its curvature.

The stack thus formed comprises, successively from the molding die 6, the mold 8, the flat annular elastomer strip and the interlayer 3.

In this way, the semifinished product 2 and its interlayer 3 are centered.

In a first centering step 1003, a first angular movement of the second centering elements 42 of the centering devices 4 brings the first centering elements 41 of the centering devices 4 into a first position centering said semifinished product 2 with respect to the main centering axis O of the centering system 1.

In this way, the semifinished product 2 is centered with respect to the main centering axis O.

In a second centering step 1004 consecutive to the first centering step 1003, a second angular movement of the second centering elements 42 of the centering devices 4 brings the second centering elements 42 into a second angular position centering the interlayer 3 of said semifinished product 2 with respect to said main centering axis O.

In this way, the interlayer 3 is centered with respect to the main centering axis O.

Once the centering steps have been completed, a pressing step 1005 is carried out, in which the interlayer 3 of the semifinished product 2 is pressed by the second gripping system against the mold 8 by way of the flat annular elastomer strip in order to give the flat annular elastomer strip the domed shape of the mold 8 of the semifinished product 2 and of the interlayer 3.

After the pressing step 1005, a step 1006 of separating said semifinished product 2 and its interlayer 3 with respect to the mold 8 is carried out. To that end, a lifting arm 7 of the centering system 1 separates said semifinished product 2 and its interlayer 3 from the mold 8.

Pivoting the lifting arm 7 with respect to the support plate 10 allows the lifting branches 71 of said arm bearing against the mold 8 to separate the semifinished product 2/interlayer 3 assembly from the mold 8.

After the separating step 1006, a step 1007 of discharging the semifinished product 2/interlayer 3 assembly is carried out. To that end, the centering system 1 is guided in vertical translation with the aid of a vertical linear guide device 102 fixed to a first side 101A of the frame 101 and guided in horizontal translation with the aid of a horizontal linear guide device 103 fixed to the frame 101.

The semifinished product 2/interlayer 3 assembly lifted by the lifting arm 7 is then set down by the movement of the centering system 1 on an arm 201 of a carousel 200 so as to be discharged.

The manufacturing method is then repeated for manufacturing each semifinished product 2.

This ensures good centering quality, and a lightening of the load carried by the centering table 100. Furthermore, the manufacturing method allows a greater production rate since manufacturing is no longer interrupted for unloading a batch.

By virtue of the method, the monitoring of a station for manufacturing a semifinished tire product 2 by one and the same operator can be reduced so that they can devote their time to unloading the semifinished products 2 to be discharged on the carousel 200 or to monitoring another station for manufacturing such a semifinished product 2.

In order to avoid any inclination of the centering table 100 during the pressing operation, provision is made for the centering table 100 to comprise a belt-pulley system 300. The belt 301 of the belt-pulley system 300 is attached by a first end 301A attached to a fixed point with respect to the ground, such as a structure supporting the frame 101 of the centering table, and a second end 301B attached to a second side 101B of the frame 101 that is not fixed to the vertical linear guide device 102 and is on the opposite side from the first side 101A.

A pulley 302 of the belt-pulley system 300 makes it possible to vertically tension at least a part of the belt 300 having the second end 301B, thereby making it possible to keep the centering table 100 horizontal with respect to the ground during the pressing operation.

Of course, the invention is not limited to the examples that have just been described, and these examples can be adapted in numerous ways without departing from the scope of the invention, which is defined by the appended claims. In particular, the different features, shapes, variants and embodiments of the invention can be combined with one another in various combinations provided they are not incompatible with or exclusive of one another. In particular, all the variants and embodiments described above are able to be combined with one another.

## Claims

1. A centering device (4) for centering a semifinished tire product (2) and an interlayer (3) of the semifinished tire product (2) on a centering system (1), the centering device (4) comprising:
- a support (40) intended to be secured to the centering system (1),
- a first centering element (41) that is fixed to the support (40) in a rotatable manner and is configured to center the semifinished tire product (2),
**characterised in that** the centering device (4) comprises a second centering element (42) that is fixed to the first centering element (41) in a rotatable manner and is configured to center the interlayer (3) of the semifinished tire product (2).

2. The centering device (4) as claimed in the preceding claim, wherein the first centering element (41) is rotatable on the support (40) about a first axis of rotation (O1), and the second centering element (42) is rotatable on the first centering element (41) about a second axis of rotation (O2),
the first axis of rotation (O1) and the second axis of rotation (O2) being offset with respect to one another.

3. The centering device (4) as claimed in the preceding claim, wherein the second centering element (42) comprises an attachment element (93) that is fixed to the second centering element (42) along a third axis of rotation (O3) and is configured to be attached to an actuating arm (51) of the centering system (1), and wherein the third axis of rotation (O3) is offset with respect to the first axis of rotation (O1) and to the second axis of rotation (O2).

4. The centering device (4) as claimed in any one of the preceding claims, wherein the second centering device (42) comprises a stop (42A) engaged in a recess (41C) in the first centering element (41), and wherein a compression element (42C) fixed to the stop (42A) extends along the recess (41C) of the first centering element (41).

5. A system for centering a semifinished tire product (2) and an interlayer (3) of the semifinished tire product (2), the centering system (1) comprising a support plate (10) and a plurality of centering devices (4) as claimed in any one of the preceding claims, wherein each centering device (4) is fixed by its support (40) to the support plate (10) such that the plurality of centering devices (4) are regularly distributed angularly about a main centering axis (O) of the centering system (1) .

6. The centering system as claimed in the preceding claim and in combination with the subject matter of claim 3, wherein it comprises a device (5) for actuating the centering devices (4), the actuating device (5) being movable linearly with respect to the support plate (10) along said main centering axis (O), and wherein each centering device (4) is connected to the actuating device (5) by way of an actuating arm (51).

7. The centering system as claimed in the preceding claim, wherein each actuating arm (51) is secured to the actuating device (5) by a fixed connection and secured to its associated centering device (4) by a slideway connection by way of an attachment element (93).

8. The centering system as claimed in any one of the preceding claims, wherein it comprises a domed molding die (6) fixed to the support plate (10), the domed molding die (6) being intended to shape the semifinished tire product (2).

9. The centering system as claimed in any one of the preceding claims, wherein it comprises a lifting arm (7) intended to separate the semifinished tire product (2) from a semifinished product mold (8), the lifting arm (7) being rotatable with respect to the support plate (10).

10. The centering system as claimed in the preceding claim, wherein the lifting arm (7) comprises at least one lifting branch (71), a free portion (71C) of which is intended to be received in a notch (83) formed in the dome of the semifinished product mold (8).

11. A centering table (100) for centering a semifinished tire product (2) and an interlayer (3) of the semifinished tire product (2), the centering table (100) comprising a frame (101) to which a centering system (1) as claimed in any one of the preceding claims is fixed.

12. The centering table (100) as claimed in the preceding claim, wherein it comprises a vertical linear guide device (102) that is fixed to a first side (101A) of the frame (101) and is configured to vertically guide the centering table (100) along a vertical axis (V) with respect to the ground, wherein the centering table (100) also comprises a belt-pulley system (300), the belt (301) of which has a first end (301A) attached to a fixed point with respect to the ground and a second end (301B) attached to a second side (101B) of the frame (101) that is not fixed to the vertical linear guide device (102) and is on the opposite side from the first side (101A).

13. The centering table (100) as claimed in the preceding claim, wherein at least one part of the belt having the second end is tensioned vertically with respect to the vertical axis with the aid of a pulley (302) of the belt-pulley system (300).

14. The centering table (100) as claimed in any one of the preceding claims, wherein the vertical axis (V) for guiding the centering table (100) and the main centering axis (O) of the centering system (1) are parallel and offset with respect to one another.

15. A method for manufacturing a semifinished tire product (2) using a centering system (1) as claimed in any one of the preceding claims,
the manufacturing method comprising the following steps:
- an initial step (1000) of positioning the centering system (1), in which a mold (8) of the semifinished product (2) is mounted in advance on the centering system (1),
- a first supply step (1001), using a first gripping system, in which a semifinished tire product (2), in the form of a flat annular elastomer strip, is supplied to the mold (8),
- a second supply step (1002), using a second gripping system, in which an interlayer (3) of the semifinished tire product (2), with a shape corresponding to the mold (8) and having an inside diameter greater than the inside diameter of the flat annular elastomer strip, is supplied to the semifinished tire product (2),
- a first centering step (1003) in which a first angular movement of the second centering elements (42) of the centering devices (4) brings the first centering elements (41) of the centering devices (4) into a first position centering said semifinished product (2) with respect to the main centering axis (O) of the centering system (1),
- a second centering step (1004), consecutive to the first centering step (1003), in which a second angular movement of the second centering elements (42) of the centering devices (4) brings the second centering elements (42) into a second angular position centering the interlayer (3) of said semifinished product (2) with respect to said main centering axis (O).

## Patentansprüche

1. Zentriervorrichtung (4) zum Zentrieren eines Reifenhalbzeugs (2) und einer Zwischenschicht (3) des Reifenhalbzeugs (2) auf einem Zentriersystem (1), die Zentriervorrichtung (4) umfassend:
- einen Träger (40), dazu vorgesehen, an dem Zentriersystem (1) gesichert zu werden,
- ein erstes Zentrierelement (41), das drehbar an dem Träger (40) befestigt ist und dazu ausgebildet ist, das Reifenhalbzeug (2) zu zentrieren,
**dadurch gekennzeichnet, dass** die Zentriervorrichtung (4) ein zweites Zentrierelement (42) umfasst, das drehbar an dem Zentrierelement (41) befestigt ist und dazu ausgebildet ist, die Zwischenschicht (3) des Reifenhalbzeugs (2) zu zentrieren,

2. Zentriervorrichtung (4) nach dem vorhergehenden Anspruch, wobei das erste Zentrierelement (41) auf dem Träger (40) um eine erste Drehachse (01) drehbar ist und das zweite Zentrierelement (42) auf dem ersten Zentrierelement (41) um eine zweite Drehachse (02) drehbar ist,
wobei die erste Drehachse (01) und die zweite Drehachse (02) aufeinander bezogen versetzt sind.

3. Zentriervorrichtung (4) nach dem vorhergehenden Anspruch, wobei das zweite Zentrierelement (42) ein Befestigungselement (93) umfasst, das entlang einer dritten Drehachse (03) an dem zweiten Zentrierelement (42) befestigt ist und dazu ausgebildet ist, an einem Betätigungsarm (51) des Zentriersystems (1) befestigt zu werden, und wobei die dritte Drehachse (03) auf die erste Drehachse (O1) und auf die zweite Drehachse (02) bezogen versetzt ist.

4. Zentriervorrichtung (4) nach einem der vorhergehenden Ansprüche, wobei die zweite Zentriervorrichtung (42) einen Anschlag (42A) umfasst, der in einer Aussparung (41C) in dem ersten Zentrierelement (41) eingesetzt ist, und wobei ein Kompressionselement (42C), das an dem Anschlag (42A) befestigt ist, sich entlang einer Anschlag (41C) des ersten Zentrierelements (41) erstreckt.

5. System zum Zentrieren eines Reifenhalbzeugs (2) und einer Zwischenschicht (3) des Reifenhalbzeugs (2), das Zentriersystem (1) umfassend eine Trägerplatte (10) und eine Vielzahl von Zentriervorrichtungen (4) nach einem der vorherghenden Ansprüche, wobei jede Zentriervorrichtung (4) durch ihren Träger (40) derart an der Trägerplatte (10) befestigt ist, dass die Vielzahl von Zentriervorrichtungen (4) in gleichmäßigen Winkelabständen um eine Hauptzentrierachse (0) des Zentriersystems (1) verteilt sind.

6. Zentriersystem nach dem vorhergehenden Anspruch und in Kombination mit dem Gegenstand des Anspruchs 3, wobei dieses eine Vorrichtung (5) zum Betätigen der Zentriervorrichtungen (4) umfasst, wobei die Betätigungsvorrichtung (5) auf die Trägerplatte (10) bezogen linear entlang der Hauptzentrierachse (0) bewegbar ist und wobei jede Zentriervorrichtung (4) über einen Betätigungsarm (51) mit der Betätigungsvorrichtung (5) verbunden ist.

7. Zentriersystem nach dem vorhergehenden Anspruch, wobei jeder Betätigungsarm (51) über eine feste Verbindung an der Betätigungsvorrichtung (5) gesichert ist, und über eine Gleitbahnverbindung in Form eines Befestigungselements (93) an seiner entsprechenden Zentriervorrichtung (4) gesichert ist.

8. Zentriersystem nach einem der vorhergehenden Ansprüche, wobei dieses eine an der Trägerplatte (10) befestigte kuppelförmige Form (6) umfasst, wobei die kuppelförmige Form (6) dazu vorgesehen ist, das Reifenhalbzeug (2) zu formen.

9. Zentriersystem nach einem der vorhergehenden Ansprüche, wobei dieses einen Hebearm (7) umfasst, dazu vorgesehen das Reifenhalbzeug (2) von einer Halbzeugform (8) zu trennen, wobei der Hebearm (7) auf die Trägerplatte (10) bezogen drehbar ist.

10. Zentriersystem nach einem der vorhergehenden Ansprüche, wobei der Hebearm (7) mindestens einen Hebezweig (71) umfasst, wobei ein freier Abschnitt (71C) davon dafür vorgesehen ist, in einer Kerbe (83) aufgenommen zu werden, die in der Kuppel der Halbzeugform (8) ausgebildet ist.

11. Zentriertisch (100) zum Zentrieren eines Reifenhalbzeugs (2) und einer Zwischenschicht (3) des Reifenhalbzeugs (2), der Zentriertisch (100) umfassend einen Rahmen (101), an dem ein Zentriersystem (1) nach einem der vorhergehenden Ansprüche befestigt ist.

12. Zentriertisch (100) nach dem vorhergehenden Anspruch, wobei dieser eine vertikale lineare Führungsvorrichtung (102) umfasst, die an einer ersten Seite (101A) des Rahmens (101) befestigt ist und dazu ausgebildet ist, den Zentriertisch (100) entlang einer vertikalen Achse (V) bezogen auf den Boden vertikal zu führen, wobei der Zentriertisch (100) zudem ein Riemenscheibensystem (300) umfasst, dessen Riemen (301) ein erstes Ende (301A) aufweist, das an einem bezogen auf den Boden festen Punkt befestigt ist, und ein zweites Ende (301B), das an einer zweiten Seite (101B) des Rahmens (101) angebracht ist, die nicht an der vertikalen linearen Führungsvorrichtung (102) befestigt ist und auf der der ersten Seite (101A) gegenüberliegenden Seite angeordnet ist.

13. Zentriertisch (100) nach dem vorhergehenden Anspruch, wobei mindestens ein Teil des Riemens mit dem zweiten Ende mit einer Riemenscheibe (302) des Riemenscheibensystems (300) vertikal bezogen auf die vertikale Achse vorgespannt wird.

14. Zentriertisch (100) nach einem der vorhergehenden Ansprüche, wobei die vertikale Achse (V) zum Führen des Zentriertischs (100) und die Hauptzentrierachse (0) des Zentriersystems (1) parallel zueinander und voneinander versetzt sind.

15. Verfahren zum Fertigen eines Reifenhalbzeugs (2) unter Einsatz eines Zentriersystems (1) nach einem der vorhergehenden Ansprüche,
wobei das das Verfahren die folgenden Schritte aufweist:
- einen Anfangsschritt (1000) des Positionierens des Zentriersystems (1), wobei die Form (8) des Halbzeugs (2) zuvor am Zentriersystem (1) montiert wird,
- einen ersten Versorgungsschritt (1001) unter Einsatz eines ersten Greifsystems, wobei ein Reifenhalbzeug (2) in der Form eines flachen, ringförmigen elastomeren Streifens in die Form (8) zugeführt wird,
- einen zweiten Versorgungsschritt (1002) unter Einsatz eines zweiten Greifsystems, wobei eine Zwischenschicht (3) des Reifenhalbzeugs (2) mit einer der Form (8) entsprechenden Gestaltungsform und mit einem Innendurchmesser größer als der Innendurchmesser des flachen, ringförmigen elastomeren Streifens, dem Reifenhalbzeug (2) zugeführt wird,
- einen ersten Zentrierschritt (1003), bei dem eine erste Winkelbewegung der zweiten Zentrierelemente (42) der Zentriervorrichtungen (4) die ersten Zentrierelemente (41) der Zentriervorrichtungen (4) in eine erste Position bringt, in der die Halbzeug (2) bezogen auf die Hauptzentrierachse (0) des Zentriersystems (1) zentriert ist,
- einen zweiten Zentrierschritt (1004) nach dem ersten Zentrierschritt (1003), bei dem eine zweite Winkelbewegung der zweiten Zentrierelemente (42) der Zentriervorrichtungen (4) die zweiten Zentrierelemente (42) in eine zweite Winkelposition bringt, in der die Zwischenschicht (3) des Halbzeugs (2) bezogen auf die Hauptzentrierachse (0) zentriert ist.

## Revendications

1. Dispositif de centrage (4) pour centrer un produit pneu semi-fini (2) et une couche intermédiaire (3) du produit pneu semi-fini (2) sur un système de centrage (1), le dispositif de centrage (4) comprenant :
- un support (40) prévu pour être assujetti au système de centrage (1) ;
- un premier élément de centrage (41) qui est fixé au support (40) de manière rotative et est configuré pour centrer le produit pneu semi-fini (2),
**caractérisé en ce que** le dispositif de centrage (4) comprend un second élément de centrage (42) qui est fixé au premier élément de centrage (41) de manière rotative et est configuré pour centrer la couche intermédiaire (3) du produit pneu semi-fini (2).

2. Dispositif de centrage (4) tel que revendiqué dans la revendication précédente, dans lequel le premier élément de centrage (41) est rotatif sur le support (40) autour d'un premier axe de rotation (O1), et le second élément de centrage (42) est rotatif sur le premier élément de centrage (41) autour d'un deuxième axe de rotation (O2),
le premier axe de rotation (O1) et le deuxième axe de rotation (O2) étant décalés l'un par rapport à l'autre.

3. Dispositif de centrage (4) tel que revendiqué dans la revendication précédente, dans lequel le second élément de centrage (42) comprend un élément d'attache (93) qui est fixé au second élément de centrage (42) le long d'un troisième axe de rotation (O3) et est configuré pour être attaché à un bras d'actionnement (51) du système de centrage (1), et dans lequel le troisième axe de rotation (O3) est décalé par rapport au premier axe de rotation (O1) et au deuxième axe de rotation (O2).

4. Dispositif de centrage (4) tel que revendiqué dans l'une quelconque des revendications précédentes, dans lequel le second dispositif de centrage (42) comprend un arrêt (42A) engagé dans un évidement (41C) dans le premier élément de centrage (41), et dans lequel un élément de compression (42C) fixé à l'arrêt (42A) s'étend le long de l'évidement (41C) du premier élément de centrage (41).

5. Système pour centrer un produit pneu semi-fini (2) et une couche intermédiaire (3) du produit pneu semi-fini (2), le système de centrage (1) comprenant une plaque de support (10) et une pluralité de dispositifs de centrage (4) tels que revendiqués dans l'une quelconque des revendications précédentes, dans lequel chaque dispositif de centrage (4) est fixé par son support (40) à la plaque de support (10) de telle sorte que la pluralité de dispositifs de centrage (4) soient régulièrement distribués angulairement autour d'un axe de centrage principal (O) du système de centrage (1).

6. Système de centrage tel que revendiqué dans la revendication précédente, et en association avec le sujet de la revendication 3, dans lequel il comprend un dispositif (5) pour actionner les dispositifs de centrage (4), le dispositif d'actionnement (5) étant mobile linéairement par rapport à la plaque de support (10) le long dudit axe de centrage principal (O), et dans lequel chaque dispositif de centrage (4) est relié au dispositif d'actionnement (5) par l'intermédiaire d'un bras d'actionnement (51).

7. Système de centrage tel que revendiqué dans la revendication précédente, dans lequel chaque bras d'actionnement (51) est assujetti au dispositif d'actionnement (5) par une liaison fixe et assujetti à son dispositif de centrage associé (4) par une liaison à glissière par l'intermédiaire d'un élément d'attache (93).

8. Système de centrage tel que revendiqué dans l'une quelconque des revendications précédentes, dans lequel il comprend une matrice de moulage en dôme (6) fixée à la plaque de support (10), la matrice de moulage en dôme (6) étant prévue pour galber le produit pneu semi-fini (2).

9. Système de centrage tel que revendiqué dans l'une quelconque des revendications précédentes, dans lequel il comprend un bras de levage (7) prévu pour séparer le produit pneu semi-fini (2) d'un moule de produit semi-fini (8), le bras de levage (7) étant rotatif par rapport à la plaque de support (10).

10. Système de centrage tel que revendiqué dans la revendication précédente, dans lequel le bras de levage (7) comprend au moins une branche de levage (71), dont une partie libre (71C) est prévue pour être reçue dans une entaille (83) formée dans le dôme du moule de produit semi-fini (8).

11. Table de centrage (100) pour centrer un produit pneu semi-fini (2) et une couche intermédiaire (3) du produit pneu semi-fini (2), la table de centrage (100) comprenant un bâti (101) auquel un système de centrage (1) tel que revendiqué dans l'une quelconque des revendications précédentes est fixé.

12. Table de centrage (100) telle que revendiquée dans la revendication précédente, dans laquelle elle comprend un dispositif guide linéaire vertical (102) qui est fixé à un premier côté (101A) du bâti (101) et est configuré pour guider verticalement la table de centrage (100) le long d'un axe vertical (V) par rapport au sol, dans laquelle la table de centrage (100) comprend également un système courroie-poulie (300), dont la courroie (301) a une première extrémité (301A) attachée à un point fixe par rapport au sol et une seconde extrémité (301B) attachée à un second côté (101B) du bâti (101) qui n'est pas fixé au dispositif guide linéaire vertical (102) et est sur le côté opposé au premier côté (101A).

13. Table de centrage (100) telle que revendiquée dans la revendication précédente, dans laquelle au moins une partie de la courroie ayant la seconde extrémité est mise en tension verticalement par rapport à l'axe vertical à l'aide d'une poulie (302) du système courroie-poulie (300).

14. Table de centrage (100) telle que revendiquée dans l'une quelconque des revendications précédentes, dans laquelle l'axe vertical (V) pour guider la table de centrage (100) et l'axe de centrage principal (O) du système de centrage (1) sont parallèles et décalés l'un par rapport à l'autre.

15. Procédé pour fabriquer un produit pneu semi-fini (2) en utilisant un système de centrage (1) tel que revendiqué dans l'une quelconque des revendications précédentes,
le procédé de fabrication comprenant les étapes suivantes :
- une étape initiale (1000) de positionnement du système de centrage (1), dans lequel un moule (8) du produit semi-fini (2) est monté d'avance sur le système de centrage (1),
- une première étape de fourniture (1001), en utilisant un premier système de préhension, dans lequel un produit pneu semi-fini (2), sous la forme d'une bande élastomère annulaire plate, est fourni au moule (8),
- une seconde étape de fourniture (1002), en utilisant un second système de préhension, dans laquelle une couche intermédiaire (3) du produit pneu semi-fini (2), avec un galbe correspondant au moule (8) et ayant un diamètre intérieur supérieur au diamètre intérieur de la bande élastomère annulaire plate, est fourni au produit pneu semi-fini (2),
- une première étape de centrage (1003) dans laquelle un premier mouvement angulaire des seconds éléments de centrage (42) des dispositifs de centrage (4) met les premiers éléments de centrage (41) des dispositifs de centrage (4) dans une première position centrant ledit produit semi-fini (2) par rapport à l'axe de centrage principal (O) du système de centrage (1),
- une seconde étape de centrage (1004), consécutive à la première étape de centrage (1003), dans laquelle un second mouvement angulaire des seconds éléments de centrage (42) des dispositifs de centrage (4) met les seconds éléments de centrage (42) dans une seconde position angulaire centrant la couche intermédiaire (3) dudit produit semi-fini (2) par rapport audit axe de centrage principal (O).
